(19) **Europäisches Patentamt**

**European Patent Office**

**Office européen des brevets**

(11) **EP 0 980 008 A2**

(12) **EUROPÄISCHE PATENTANMELDUNG**

(43) Veröffentlichungstag:
**16.02.2000 Patentblatt 2000/07**

(51) Int. Cl.⁷: **G01S 7/03**

(21) Anmeldenummer: **99112388.6**

(22) Anmeldetag: **29.06.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **03.07.1998 DE 19829762**

(71) Anmelder:
**Automotive Distance Control Systems GmbH
88131 Lindau (DE)**

(72) Erfinder:
• **Adomat, Rolf
88045 Friedrichshafen (DE)**
• **Waibel, Franz
88410 Bad Wurzach-Haidgau (DE)**

(74) Vertreter: **Kolb, Georg
DaimlerChrysler AG,
Postfach 35 35
74025 Heilbronn (DE)**

(54) **Verfahren zum Betrieb eines Radarsystems**

(57) Es soll auf einfache Weise und mit geringen Kosten eine Bestimmung der Entfernung und/oder der Radialgeschwindigkeit mindestens eines Reflexionsobjekts mit hoher Winkelauflösung ermöglicht werden.

Beim Radarsystem wird in jeder Meßphase des Meßvorgangs mehrfach in kurzen zeitlichen Abständen zwischen einem Sendebetrieb und einem Empfangsbetrieb umgeschaltet, wobei im Sendebetrieb jeweils ein pulsförmiges Sendesignal mit Sendepulsen einer bestimmten Pulsdauer emittiert wird und im Empfangsbetrieb in den Pulspausen der Sendepulse Reflexionssignale als Empfangssignal detektiert werden.

In mindestens einer Meßphase des Meßvorgangs werden als Sendeantenne zur Emission des pulsförmigen Sendesignals und als Empfangsantenne zur Detektion des Empfangssignals unterschiedliche, nebeneinander angeordnete zur Erfassung unterschiedlicher Winkelbereiche vorgesehene Antennen verwendet.

Verfahren zum Betrieb eines Abstandswarnsystems für Kraftfahrzeuge.

FIG.2a

**Beschreibung**

Radarsysteme werden zur Bestimmung der Entfernung zu bewegten oder ruhenden Objekten (Zielobjekten) und/oder zur Bestimmung der Geschwindigkeit (Radial- bzw. Relativ-Geschwindigkeit) von bewegten oder ruhenden Objekten (Zielobjekten) für unterschiedliche Beobachtungsbereiche (Entfernungsbereiche) eingesetzt. Hauptanwendungsgebiete für Radarsysteme sind in der Regel Beobachtungsbereiche mit großen Entfernungen zwischen dem Radar und den Zielobjekten ("Fernbereich", bsp. je nach Anwendung bis 150 km oder 300 km Entfernung), bsp. in der Luftfahrt bei der Flugsicherung oder zu Navigationszwecken; daneben gibt es in jüngster Zeit auch Anwendungen für Radarsysteme in Beobachtungsbereichen mit sehr geringer Entfernung zwischen dem Radar und den Zielobjekten ("Nahbereich", bsp. je nach Anwendung bis 20 m oder 250 m Entfernung), bsp. im KFZ-Bereich zur Erfassung des ein Kraftfahrzeug umgebenden Verkehrsraums, d.h. zur Bestimmung der Entfernung (des Abstands) eines Kraftfahrzeugs zu vorausfahrenden, nachfolgenden oder entgegenkommenden Kraftfahrzeugen oder sonstigen Reflexionsobjekten und/oder der Relativgeschwindigkeit des Kraftfahrzeugs bezüglich vorausfahrenden, nachfolgenden oder entgegenkommenden Kraftfahrzeugen oder sonstigen Reflexionsobjekten. Das mittels eines Oszillators generierte und von einer (Sende-)Antenne emittierte analoge hochfrequente Sendesignal (Sendefrequenz im GHz-Bereich, typischerweise zwischen 18 GHz und 94 GHz) wird nach dem Durchlaufen einer Übertragungsstrecke und der Reflexion an den im Beobachtungsbereich befindlichen Reflexionsobjekten von einer (Empfangs-)Antenne detektiert und dieses Empfangssignal (Reflexionssignal) nach der Signalverarbeitung (Weiterverarbeitung) hinsichtlich Laufzeit und/oder Frequenzverschiebung bzw. Phasenverschiebung ausgewertet; hieraus kann dann die benötigte Entfernungs- und/oder Geschwindigkeits-Information gewonnen werden.

Die beiden gebräuchlichen Radarsysteme, das Puls-Radarsystem und das FMCW-Radarsystem, unterscheiden sich im Meßprinzip, insbesondere in der Generierung des Sendesignals und im (zeitlichen) Verlauf des Sendesignals:

- beim Puls-Radarsystem wird das Sendesignal zyklisch unterbrochen, d.h. es werden Sendepulse mit bestimmter Pulsdauer emittiert; in den Pulspausen zwischen zwei Sendepulsen werden die Reflexionssignale der vorausgehenden Sendepulse als Empfangssignale detektiert (abwechselnder Sendebetrieb und Empfangsbetrieb). Die Entfernung zu den Zielobjekten (Reflexionsobjekten) wird durch eine direkte Signal-Laufzeitmessung ermittelt, die gewünschte Auflösung (d.h. die Entfernungsauflösung) des Puls-Radarsystems kann über die Pulsdauer (die Pulsbreite) der Sendepulse vorgegeben werden. Zur Enfernungsselektion werden bei der Signalverarbeitung des Empfangssignals üblicherweise verschiedenen Signal-Laufzeiten entsprechende und damit für eine ganz bestimmte Entfernung selektive "Entfernungstore" eingesetzt.

  Beim Puls-Radarsystem ist eine Sende-Empfangs-Entkopplung leicht möglich, d.h. ein Übersprechen des Sendesignals in das Empfangssignal kann durch geeignete Umschaltung vom Sendebetrieb zum Empfangsbetrieb (bsp. mittels Sende-Empfangs-Schaltern) vollständig verhindert werden. weiterhin kann durch Vorgabe einer entfernungsabhängigen Verstärkung bei der Signalverarbeitung mittels laufzeitabhängiger Regelung der Empfindlichkeit der Signalverstärkung ("Sensitivity Time Control" STC) der zu verarbeitende Dynamikbereich des Empfangssignals (die Eingangsdynamik bei der Detektion des Empfangssignals) deutlich reduziert werden.

- Beim FMCW-Radarsystem wird das Sendesignal kontinuierlich emittiert ("continuous wave" cw), wobei die Sendefrequenz des Sendesignals variiert wird, d.h. durch Frequenzmodulation (FM) einen bestimmten Modulationsverlauf aufweist; gleichzeitig wird das Empfangssignal detektiert. Infolge des gleichzeitigen Sendebetriebs und Empfangsbetriebs ist ein hoher Aufwand für eine ausreichende Sende-Empfangs-Entkopplung erforderlich, was einerseits hohe Kosten und andererseits störende Nebeneffekte verursacht.

Daher werden im Nahbereich (bsp. zur Erfassung des ein Kraftfahrzeug umgebenden Verkehrsraums bezüglich der Reflexionsobjekte Hindernisse und anderer Fahrzeuge üblicherweise Puls-Radarsysteme (Pulsdoppler-Radarsysteme) eingesetzt, mit denen Entfernung, Relativgeschwindigkeit und Position der Reflexionsobjekte bestimmt werden können. Eine wichtige Kenngröße zur Beurteilung der Güte des Puls-Radarsystems ist die Winkelmeßgenauigkeit, d.h. die Winkelauflösung des Azimuthwinkels, mit der sich unterschiedliche Reflexionsobjekte trennen lassen. Zur Erhöhung des Auflösungsvermögens werden mehrere Antennen (d.h. mindestens zwei Antennen) aufweisende Radarsysteme eingesetzt:

- Aus der Literaturstelle Skolnik: "Radar Handbook", Verlag McGraw-Hill, 1990, 2nd edition) ist ein sog. Mono-Puls-Verfahren bekannt, bei dem ein Sendesignal mit einem breiten Sendestrahl ausgesendet wird und zwei symmetrisch zum Sendestrahl angeordnete Empfangsantennen die Reflexionssignale detektieren. Durch Auswertung von Differenz und Summe der beiden Empfangssignale kann die Winkellage der Reflexionsobjekte bestimmt werden.

- Aus der EP 499 706 A2 ist ein sog. Puls-Doppler-Verfahren bekannt, bei dem zur Emission des Sendesignals und zur Detektion des Empfangssignals dieselbe Antenne verwendet wird. Mittels sequentieller Ansteuerung mehrerer Antennen und durch Vergleich der Amplitudeninformation der einzelnen Empfangssignale kann die Winkellage der Reflexionsobjekte ermittelt werden.

Der Erfindung liegt die Aufgabe zugrunde, ein Verfahren zum Betrieb eines Radarsystems anzugeben, mit dem eine Bestimmung der Winkellage von Reflexionsobjekten mit hoher Genauigkeit auf einfache weise und mit geringen Kosten ermöglicht wird.

Diese Aufgabe wird nach der Erfindung durch die Merkmale im Kennzeichen des Patentanspruchs 1 gelöst.

Vorteilhafte Weiterbildungen des Verfahrens sind Bestandteil der weiteren Patentansprüche.

Beim vorgeschlagenen Verfahren wird während jeder Meßphase eines Meßvorgangs mehrfach in kurzen zeitlichen Abständen zwischen einem Sendebetrieb (Emission des Sendesignals) und einem Empfangsbetrieb (Detektion des Empfangssignals) umgeschaltet; das Verhältnis der Zeitdauer des Sendebetriebs zur Zeitdauer des Empfangsbetriebs kann dabei je nach den Anforderungen beliebig vorgegeben werden. Während mindestens einer Meßphase des Meßvorgangs werden im Sendebetrieb zur Emission des Sendesignals und im Empfangsbetrieb zur Detektion des Empfangssignals unterschiedliche (nebeneinander angeordnete, Verschiedene Winkelbereiche erfassende) Antennen verwendet, d.h. die Sendeantenne unterscheidet sich in dieser Meßphase des Meßvorgangs von der Empfangsantenne; in den übrigen Meßphasen des Meßvorgangs wird im Sendebetrieb zur Emission des Sendesignals und im Empfangsbetrieb zur Detektion des Empfangssignals dagegen dieselbe Antenne verwendet, d.h. Sendeantenne und Empfangsantenne sind identisch. Demnach wird während mindestens einer Meßphase des Meßvorgangs gleichzeitig zur Umschaltung vom Sendebetrieb zum Empfangsbetrieb auch zwischen zwei nebeneinander angeordneten Antennen des Radarsystems umgeschaltet; hierdurch werden als Empfangssignal all diejenigen Reflexionssignale erfaßt, die im Überlappungsbereich der Sendestrahlen der Sendeantenne und der hiervon unterschiedlichen Empfangsantenne liegen. Durch Auswertung der Empfangssignale (der winkelabhängigen Amplitude bzw. Intensität der Reflexionssignale) dieser Meßphasen mit unterschiedlicher Sendeantenne und Empfangsantenne, lassen sich zusätzliche Informationen gewinnen: das Einbeziehen der Überlappungsbereiche ist bei der Signalauswertung gleichbedeutend mit der Erhöhung einer vorgegebenen Anzahl n der Antennen des Radarsystems auf n(n-1). Hierdurch kann die Winkelmeßgenauigkeit und die Leistungsfähigkeit des Radarsytems gesteigert werden, was insbesondere bei der Applikation Erfassung des Verkehrsraums von großer Bedeutung ist.

Die Umschaltung zwischen der Sendeantenne und der hiervon abweichenden Empfangsantenne beim Wechsel vom Sendebetrieb zum Empfangsbetrieb erfolgt über einen Antennenschalter, bsp. einen HF-Umschalter, der von einer Steuereinheit des Radarsystems angesteuert wird. Die Ansteuerung des Antennenschalters erfolgt dabei synchron zur Ansteuerung der beiden beim Wechsel vom Sendebetrieb zum Empfangsbetrieb umgeschalteten Schalter Sende-Empfangs-Schalter und LO-Schalter; hierzu muß der Antennenschalter schnell umschaltbar sien, d.h eine hohe Grenzfrequenz besitzen. Die Umschaltung zwischen der Sendeantenne und der hiervon abweichenden Empfangsantenne erfolgt in einer kurzen Zeit, bsp. innerhalb von 5 ns.

Beim vorgestellten Verfahren zum Betrieb eines Radarsystems ist vorteilhafterweise

- aufgrund der durch den Antennenwechsel von einer Sendeantenne zu einer hiervon abweichenden Empfangsantenne erhaltenen zusätzlichen Informationen eine hohe Winkelmeßgenauigkeit (Winkelauflösung) und damit eine verbesserte Trennung von Zielobjekten erreichbar,
- bei entsprechender Ausgestaltung des Antennenschalters- eine Implementierung in bestehende Puls-Radarsysteme ohne zusätzlichen Hardwareaufwand möglich,
- ein Einsatz bei allen Puls-Radarsystemen mit mindestens zwei Antennen möglich (d.h. bei Radarsystemen mit einer beliebigen Anzahl von Antennen); die Vorteile der Puls-Radarsysteme (Puls-Doppler-Radarsysteme) bezüglich Signalverarbeitung und Mehrzielfähigkeit bleiben erhalten.

Das Verfahren zum Betrieb eines Radarsystems soll anhand eines Ausführungsbeispiels, einem Abstandssensor für ein KFZ-Abstandswarnsystem, im Zusammenhang mit der Zeichnung näher erläutert werden.

Hierbei zeigt

Figur 1 ein schematisches Blockschaltbild des Radarsystems,

Figur 2 die zeitliche Abfolge der Meßphasen während eines Meßvorgangs anhand des Sendesignals (Figur 2a) und anhand des Empfangssignals (Figur 2b),

Figur 3 den zeitlichen Meßverlauf innerhalb der Meßphase eines Meßvorgangs.

Von Abstandssensoren in KFZ-Abstandswarnsystemen muß die Entfernung (und ggf. die Relativgeschwindigkeit) der im Beobachtungsbereich befindlichen Reflexionsobjekte, d.h. von vorausfahrenden, entgegenkommenden oder nachfolgenden Fahrzeugen, Personen und sonstigen Reflexionsobjekten, eindeutig und mit hoher Auflösung bestimmt werden; bsp. beträgt der gewünschte Entfernungseindeutigkeitsbereich 150 m (dieser ist im Vergleich zu anderen Radarsystemen relativ klein), die gewünschte Entfernungsauflösung 1 m und die gewünschte Geschwindigkeitsauflösung 1 km/h. Weiterhin wird eine gute Winkelauflösung angestrebt, d.h. eine Trennung unterschiedlicher Reflexionsobjekte (bsp. die Trennung mehrerer auf verschiedenen Fahrspuren vorausfahrender Fahrzeuge) muß mit ausreichender Genauigkeit möglich sein; gewünscht wird bsp. ein Auflösungsvermögen des Azimuthwinkels (eine Winkelauflösung) von 0.1°.

In mehreren Meßphasen eines Meßvorgangs wird hierzu von einer der (Sende-)Antennen eines mehrere Antennen aufweisenden Puls-Doppler-Radarsystems ein Sendesignal mit der Sendefrequenz (Trägerfrequenz) von bsp. 76.5 GHz in einem bestimmten Winkelbereich emittiert (Sendebetrieb); das durch Reflexion an den sich in diesem Winkelbereich befindlichen Reflexionsobjekten (bsp. den vorausfahrenden Kraftfahrzeugen oder Hindernissen) erhaltene Reflexionssignal wird von einer (Empfangs-)Antenne des Puls-Doppler-Radarsystems als analoges Empfangssignal detektiert (Empfangsbetrieb). Für den Sendebetrieb und für den Empfangsbetrieb einer Meßphase des Meßvorgangs kann die gleiche Antenne verwendet werden, wobei aber in mindestens einer Meßphase des Meßvorgangs für den Sendebetrieb und für den Empfangsbetrieb unterschiedliche, nebeneinander angeordnete, zur Erfassung benachbarter Winkelbereiche vorgesehene Antennen verwendet werden (Antennenwechsel). Die mehrfache Umschaltung vom Sendebetrieb zum Empfangsbetrieb innerhalb einer Meßphase des Meßvorgangs erfolgt in kurzen zeitlichen Abständen mittels einer von einer Steuereinheit angesteuerten HF-Schalteinheit; gleichzeitig mit dieser Umschaltung wird bei einem Antennenwechsel auch von der Sendeantenne zur Empfangsantenne umgeschaltet. Von einer Signalverarbeitungseinheit wird das Empfangssignal während eines bestimmten Zeitintervalls innerhalb des Empfangsbetriebs weiterverarbeitet und hinsichtlich Frequenzdifferenz bzw. Frequenzverschiebung und/oder Phasendifferenz bzw. phasenverschiebung ausgewertet und hieraus die Entfernungsinformation und ggf. die Geschwindigkeitsinformation durch Spektralanalyse gewonnen.

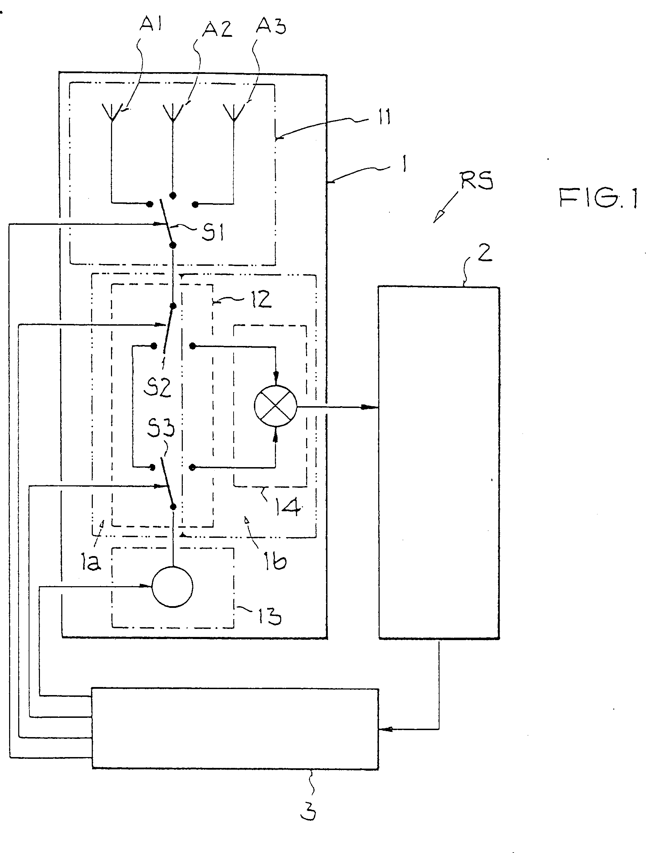

Gemäß der Figur 1 weist das Puls-Doppler-Radarsystem RS hierzu folgenden Aufbau auf:

- Eine Sende-Empfangs-Einheit 1 mit einer "Sendeseite" 1a und einer "Empfangsseite" 1b zur Emission des Sendesignals und zur Detektion des Empfangssignals, deren wesentliche Komponenten als einheitliches Modul kompakt zusammengefaßt sind.

Die Antenneneinheit 11 der Sende-Empfangs-Einheit 1 zur Emission des Sendesignals und gleichzeitig zur Detektion des Empfangssignals weist zur Erfassung unterschiedlicher Winkelbereiche drei unterschiedliche Antennen A1, A2, A3 auf sowie einen Antennenschalter S1 zur Selektion der jeweiligen Antenne A1 bzw. A2 bzw. A3, wobei in einer Meßphase des Meßvorgangs entweder eine der Antennen A1, A2, A3 gleichzeitig als Sendeantenne und als Empfangsantenne herangezogen wird oder aber im Falle eines Antennenwechsels bei einer bestimmten als Sendeantenne verwendeten Antenne A1 bzw. A2 die jeweils benachbarte Antenne A2 bzw. A3 als Empfangsantenne herangezogen wird (in diesem Fall erfolgt das Umschalten des Antennenschalters S1 am Ende des jeweiligen Sendebetriebs parallel zum Umschalten auf den Empfangsbetrieb).

Mittels der HF-Schalteinheit 12 mit den beiden HF-Schaltern Sende-Empfangs-Schalter S2 und LO-Schalter S3 kann zwischen der Sendeseite 1a und der Empfangsseite 1b der Sende-Empfangs-Einheit 1, d.h. zwischen dem Sendebetrieb und dem Empfangsbetrieb umgeschaltet werden. Das (synchrone) Schalten des Sende-Empfangs-Schalters S2 und des LO-Schalters S3 sowie im Falle eines Antennenwechsels des Antennenschalters S1 wird in Abhängigkeit der Pulsdauer der Sendepulse durchgeführt (Pulsdauer bsp. 50 ns). Im Sendebetrieb sind die beiden Schalter Sende-Empfangs-Schalter S2 und LO-Schalter S3 in der linken Stellung (auf der Sendeseite 1a), der Antennenschalter S1 ist mit einer der Sendeantennen A1 bzw. A2 bzw. A3 verbunden; während des Empfangbetriebs sind die beiden Schalter Sende-Empfangs-Schalter S2 und LO-Schalter S3 in der rechten Stellung (auf der Empfangsseite 1b), der Antennenschalter S1 ist mit einer der Empfangsantennen verbunden (entweder ist die Empfangsantenne die gleiche Antenne A1 bzw. A2 bzw. A3 wie die Sendeantenne oder die Empfangsantenne ist die zur Sendeantenne A1 bzw. A2 benachbarte Antenne A2 bzw. A3).

Mittels eines bsp. als VCO ausgebildeten Oszillators 13 (Leistung bsp. 10 mW) wird HF-Strahlung mit der Oszillatorfrequenz 76.5 GHz erzeugt (Trägerfrequenz der Sendepulse). In den Meßphasen des Meßvorgangs wird eine wiederholte Umschaltung vom Sendebetrieb zum Empfangsbetrieb vorgenommen. Von der Empfangsseite 1b der sende-Empfangs-Einheit 1 werden als Empfangssignal die vom letztmalig emittierten Sendepuls herrührenden Reflexionssignale der im erfaßten Winkelbereich (Beobachtungsbereich) befindlichen Reflexionsobjekte vor der Emisssion des nächsten Sendepulses detektiert (d.h. vor der Umschaltung vom Empfangsbetrieb zum nächsten Sendebetrieb); hierzu wird der Antennenschalter S1 für eine bestimmte Empfangszeit mit der Empfangsantenne verbunden, wobei die Empfangszeit und damit die Entfernung des vorgegebenen Winkelbereichs zur Entfernungsselektion variiert werden kann.

Ein auf der Empfangsseite 1b der Sende-Empfangs-Einheit 1 vorgesehener Mischer 14 (die Mischfrequenz entspricht bsp. der Empfangsfrequenz, die um die Zwischenfrequenz niedriger ist als die Sendefrequenz) überführt das Empfangssignal durch Multiplikation mit der während eines Sendepulses konstanten Oszillatorfrequenz als Mischsignal in die Zwischenfrequenzebene.

- Eine Signalverarbeitungseinheit 2 zur Signalverarbeitung des Mischsignals (zur Weiterverarbeitung des Mischsignals); die Signalverarbeitungseinheit 2 enthält bsp. einen Vorverstärker, ein Filter, einen Analog-Digital-Wandler (A/D-Wandler) und eine Digitalverarbeitungseinheit.

Eine Auswertung des Empfangssignals wird dabei innerhalb eines bestimmten Zeitintervalls während des Empfangsbetriebs vorgenommen.

- Eine Steuereinheit 3, die die Ansteuerung des Antennenschalters S1 der Antenneneinheit 11 und der beiden HF-Schalter Sende-Empfangs-Schalter S2 und LO-Schalter S3 der HF-Schalteinheit 12 sowie die Ansteuerung des Oszillators 13 übernimmt.

Während der Zeitdauer, in der das Abstandswarnsystem des Kraftfahrzeugs aktiviert ist, werden zyklisch Meßvorgänge durchgeführt. Für einen Meßvorgang kann eine bestimmte Anzahl an Meßphasen und innerhalb einer Meßphase eine bestimmte Reihenfolge der verwendeten Sendeantennen und Empfangsantennen vorgegeben werden; bei einem Radarsystem mit n Antennen können pro Meßvorgang maximal n(n-1) unterschiedliche Meßphasen vorgegeben werden.

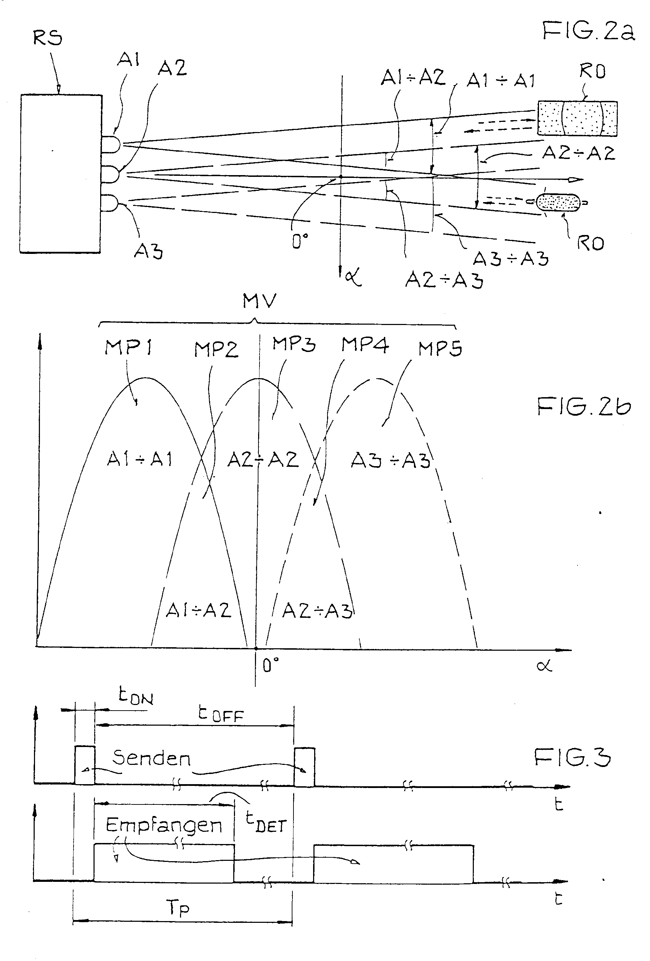

Anhand der Figur 2 wird der zeitliche Ablauf eines Meßvorgangs erläutert, d.h. die zeitliche Abfolge der verschiedenen Meßphasen eines Meßvorgangs in Abhängigkeit des vom Radarsystem erfaßten Winkelbereichs. Hierbei ist in der Figur 2 in Abhängigkeit des Azimuthwinkels $\alpha$ (Winkel bezüglich der optischen Achse $\alpha$ = 0°) die räumliche Anordnung dreier Antennen an einem Kraftfahrzeug und das von der jeweiligen Sendeantenne A1 bzw. A2 bzw. A3 emittierte Sendesignal (der von dem "Sendestrahl" der jeweiligen Sendeantenne A1 bzw. A2 bzw. A3 erfaßte Winkelbereich) dargestellt (Fig. 2a) und als Maß für die "Empfindlichkeit" des Radarsystems die Amplitude (Intensität) des von der jeweiligen Empfangsantenne A1 bzw. A2 bzw. A3 detektierten Empfangssignals (Fig. 2b).

Ein Meßvorgang MV (Zeitdauer bsp. 50 ms) wird bsp. in fünf gleichlange, zeitlich aufeinanderfolgende Meßphasen MP1, MP2, MP3, MP4, MP5 unterteilt, die jeweils die gleiche Zeitdauer von bsp. jeweils 10 ms aufweisen.

In der Meßphase MP1 wird die Antenne A1 sowohl im Sendebetrieb als Sendeantenne als auch im Empfangsbetrieb als Empfangsantenne verwendet und damit der im "Sendestrahl" der Antenne A1 liegende negative Bereich des Azimuthwinkels $\alpha$ erfaßt, in dem sich das erste Reflexionsobjekt RO befindet. In der Meßphase MP2 wird die Antenne A1 im Sendebetrieb als Sendeantenne und die Antenne A2 im Empfangsbetrieb als Empfangsantenne verwendet und damit der Überlappungsbereich des Azimuthwinkels $\alpha$ zwischen dem "Sendestrahl" der Antenne A1 und dem "Sendestrahl" der Antenne A2 erfaßt. In der Meßphase MP3 wird die Antenne A2 sowohl im Sendebetrieb als Sendeantenne als auch im Empfangsbetrieb als Empfangsantenne verwendet und damit der im "Sendestrahl" der Antenne A2 liegende Winkelbereich um die optische Achse erfaßt (Azimuthwinkel $\alpha$ = 0°), in dem sich auch das zweite Reflexionsobjekt RO befindet. In der Meßphase MP4 wird die Antenne A2 im Sendebetrieb als Sendeantenne und die Antenne A3 im Empfangsbetrieb als Empfangsantenne verwendet und damit der Überlappungsbereich des Azimuthwinkels $\alpha$ zwischen dem "Sendestrahl" der Antenne A2 und dem "Sendestrahl" der Antenne A3 erfaßt, in dem sich auch das zweite Reflexionsobjekt RO befindet. In der Meßphase MP5 wird die Antenne A3 sowohl im Sendebetrieb als Sendeantenne als auch im Empfangsbetrieb als Empfangsantenne verwendet und damit der im "Sendestrahl" der Antenne A3 liegende positive Bereich des Azimuthwinkels $\alpha$ erfaßt.

In anderen Meßvorgängen kann eine abgeänderte Reihenfolge gegenüber der beschriebenen Abfolge der Meßphasen oder eine bestimmte Auswahl der maximal möglichen Meßphasen vorgegeben werden; weiterhin kann die Zeitdauer der einzelnen Meßphasen innnerhalb eines Meßvorgangs unterschiedlich lang gewählt werden.

Gemäß der Figur 3 ist ein Ausschnitt des zeitlichen Meßverlaufs für eine Meßphase MP1 des Meßvorgangs MV beispielhaft dargestellt. In allen Meßphasen MP1, MP2, MP3, MP4, MP5 des Meßvorgangs MV wird mehrfach vom Sendebetrieb zum Empfangsbetrieb umgeschaltet (bsp. wird in jeder Meßphase MP1, MP2, MP3, MP4, MP5 des Meßvorgangs MV 2000-mal vom Sendebetrieb zum Empfangsbetrieb umgeschaltet, d.h es werden in jeder Meßphase MP1, MP2, MP3, MP4, MP5 des Meßvorgangs MV 2000 Sendepulse emittiert). Die Periodendauer $T_P$ eines Pulszyklus der Sendepulse setzt sich aus der Pulsdauer $t_{ON}$ bzw. dem Sendeintervall (Sendebetrieb) und der Pulspause $t_{OFF}$ zusammen. Im Empfangsbetrieb (Pulspause $t_{OFF}$) werden die Reflexionssignale durch die jeweils vorgegebene Empfangsantenne aus einem bestimmten Winkelbereich des Azimuthwinkels $\alpha$ detektiert; innerhalb des Empfangsbetriebs wird eine bestimmte Empfangsdauer $t_{DEK}$ (ein bestimmtes Empfangsintervall) vorgegeben, in der die detektierten Empfangssignale weiterverarbeitet und ausgewertet werden.

Bsp. beträgt die Pulsdauer $t_{ON}$ der Sendepulse 50 ns, die Pulspause $t_{OFF}$ zwischen den Sendepulsen 4.95 µs und somit die Periodendauer $T_P$ eines Pulszyklus 5 µs; jeder Meßphase des Meßvorgangs werden 2000 Pulszyklen zugeordnet, so daß die Meßphasen jeweils eine Zeitdauer von 10 ms aufweisen. Bsp. beträgt die Empfangsdauer $t_{DEK}$ im Empfangsbetrieb 1 µs, d.h. alle innerhalb von 1 µs nach der Emission eines Sendepulses eintreffenden Reflexionssignale werden detektiert.

Die Pulswiederholfrequenz $f_{PW}$ ergibt sich zu $f_{PW} = T_P^{-1}$ $(T_P = t_{ON} + t_{OFF})$, im obigen Beispielsfall mit der Periodendauer $T_P$ eines Pulszyklus von 5 µs beträgt die Pulswiederholfrequenz $f_{PW}$ 200 kHz. Der "Duty-Cycle" D ergibt sich zu $D = t_{ON}/T_P$, im obigen Beispielsfall mit einer Pulsdauer $t_{ON}$ der Sendepulse von 50 ns und der Periodendauer $T_P$ eines Pulszyklus von 5 µs beträgt der Duty-Cycle D = 1%. Bei einem Antennenwechsel beträgt die Umschaltzeit von einer Sendeantenne zu einer anderen Empfangsantenne beim Wechsel vom Sendebetrieb zum Empfangsbetrieb bsp. 5 ns.

Bei der Vorgabe der Spezifikationen des Radarsystems zur Durchführung des Verfahrens ist folgendes zu beachten:

- die Pulsdauer $t_{ON}$ der Sendepulse bestimmt die mittlere Sendeleistung und damit die Reichweite des Radarsystems.
  die gewünschte Winkelauflösung $\Delta\alpha$ des Radarsystems für Reflexionsobjekte in gleicher Entfernung und mit gleicher Reativgeschwindigkeit wird durch die Anzahl und die Form der Antennen bestimmt.

- die gewünschte Geschwindigkeitsauflösung $\Delta V$ des Radarsystems bestimmt die Zeitdauer der Meßphasen MP1, MP2, MP3, MP4, MP5 eines Meßvorgangs MV. Bsp. ergibt sich bei einer Sendefrequenz (Trägerfrequenz) von 76.5 GHz und einer Zeitdauer der einzelnen Meßphasen MP1, MP2, MP3, MP4, MP5 von jeweils 10 ms eine Geschwindigkeitsauflösung $\Delta v$ von 5 km/h.

- der Entfernungseindeutigkeitsberelch $R_E$ des Radarsystems wird von der Periodendauer $T_P$ eines Pulszyklus bzw. der Pulswiederholfrequenz $f_{PW}$ bestimmt:

  $R_E = T_P \cdot C$ (C = Lichtgeschwindigkeit).

**Patentansprüche**

1. Verfahren zum Betrieb eines mindestens zwei Antennen (A1, A2, A3) zur Erfassung unterschiedlicher Winkelbereiche aufweisenden Radarsystems (RS), bei dem in einem Meßvorgang (MV) mit mehreren Meßphasen (MP1, MP2, MP3, MP4, MP5) die Entfernung und/oder die Radialgeschwindigkeit der im Beobachtungsbereich befindlichen Reflexionsobjekte (RO) bestimmt wird, indem in jeder Meßphase (MP1, MP2, MP3, MP4, MP5) des Meßvorgangs (MV) mehrfach zwischen einem Sendebetrieb und einem Empfangsbetrieb umgeschaltet wird, wobei jeweils im Sendebetrieb ein pulsförmiges Sendesignal mit Sendepulsen einer bestimmten Pulsdauer ($t_{ON}$) emittiert wird und jeweils im Empfangsbetrieb in den Pulspausen ($t_{OFF}$) der Sendepulse Reflexionssignale als Empfangssignal detektiert werden,
dadurch gekennzeichnet,

daß als Sendeantenne zur Emission des pulsförmigen Sendesignals und als Empfangsantenne zur Detektion des Empfangssignals in mindestens einer Meßphase (MP1, MP3, MP5) des Meßvorgangs (MV) die gleiche Antenne (A1, A1; A2, A2; A3, A3) verwendet wird und in mindestens einer Meßphase (MP2, MP4) des Meßvorgangs (MV) unterschiedliche, nebeneinander angeordnete Antennen (A1, A2; A2, A3) verwendet werden.

2. Verfahren nach Anspruch 1, dadurch gekennzeichnet, daß die Sendeantenne und die Empfangsantenne mittels eines Antennenschalters (S1) selektiert wird.

3. Verfahren nach Anspruch 2, dadurch gekennzeichnet, daß der Antennenschalter (S1) von einer Steuereinheit (2) des Radarsystems (RS) angesteuert wird.

4. Verfahren nach Anspruch 3, dadurch gekennzeichnet, daß die Ansteuerung des Antennenschalters (S1) synchron zur Ansteuerung der beiden bei der Umschaltung vom Sendebetrieb zum Empfangsbetrieb umgeschalteten Schalter Sende-Empfangs-Schalter (S2) und LO-Schalter (S3) vorgenommen wird.

A1  A2  A3

11

1

RS

FIG.1

2

S1

12

S2

S3

14

1a

16

13

3

FIG.2a

MV

FIG.2b

FIG.3